# FASCICULE DE BREVET EUROPEEN

(11) **EP 1 112 319 B1**
(45) Date de publication et mention de la délivrance du brevet: **19.03.2003**
(21) Numéro de dépôt: 99941730.6
(22) Date de dépôt: 09.09.1999
(51) Int. Cl.: C08L 3/00, C08L 23/12

(54) **MATERIAU BIODEGRADABLE A BASE DE POLYMERE ET DE FARINE CEREALIERE, SON PROCEDE DE FABRICATION ET SES UTILISATIONS**
BIOLOGISCH ABBAUBARER WERKSTOFF AUF BASIS EINES POLYMERS UND GETREIDEMEHL, VERFAHREN ZUR HERSTELLUNG UND VERWENDUNGEN
BIODEGRADABLE MATERIAL BASED ON POLYMER AND CEREAL FLOUR, METHOD FOR MAKING SAME AND USES

(30) Priorité: 09.09.1998 FR 9811269
(43) Date de publication de la demande: 04.07.2001
(73) Titulaire: Ulice S.A., 63200 Riom Cedex (FR)
(72) Inventeur: REYNES, Pierre, F-63200 Riom (FR); MESSAGER, Arnaud, F-63200 Riom (FR)
(74) Mandataire: Breese, Pierre
(86) Numéro de dépôt international: FR9902151
(87) Numéro de publication internationale: WO00014154

(56) Documents cités:
- EP-A- 0 421 413
- WO-A-93/05668
- FR-A- 2 610 635
- DATABASE WPI Week 7625 Derwent Publications Ltd., London, GB; AN 4505X XP002104424 & JP 50 073942 A (SUMITOMO BAKELITE CO), 18 juin 1975 (1975-06-18)
- RAMKUMAR D H S ET AL: "Properties of injection moulded starch/synthetic polymer blends-II. Evaluation of mechanical properties" EUROPEAN POLYMER JOURNAL,GB,PERGAMON PRESS LTD. OXFORD, vol. 33, no. 5, page 729-742 XP004087458 ISSN: 0014-3057

## Description

La présente invention se rapporte au domaine de la biodégradabilité des matières plastiques et concerne la mise au point de matériaux composites à base de polymères et de farines céréalières. Ces matériaux biodégradables sont destinés à se substituer aux plastiques synthétiques utilisés dans de nombreux domaines d'activité comme la cosmétologie, la pharmacie ou l'agroalimentaire, par exemple en tant que produit d'emballage.

Les polymères synthétiques sont utilisés dans de très nombreux secteurs industriels et en particulier dans celui de l'emballage car ils présentent au moins les trois avantages suivants :
- facilité de mise en forme,
- très bonnes propriétés physico-chimiques,
- faible coût.
Mais, le principal défaut de ces matériaux est qu'ils ne peuvent pas être biodégradés, après utilisation, par des voies naturelles et écologiques. Les déchets plastiques deviennent alors des agents polluants très importants. Les seules voies aujourd'hui principalement exploitées sont le recyclage et l'incinération. Mais ceci ne représente que de très faibles volumes et engendre des coûts très importants.
La biodégradabilité peut se définir comme la dégradation physique et/ou chimique, au niveau moléculaire, des substances par l'action de facteurs environnementaux (en particulier des enzymes issues des processus de métabolisme des microorganismes.

On connait dans l'art antérieur des matériaux biodégradables susceptibles d'être substitués à ces matières plastiques synthétiques. On peut citer tout d'abord le film biodégradable à base d'un polymère synthétique et d'un matériel biologique comme par exemple, de l'amidon, de la cellulose, de la farine de blé ou de la farine de riz décrit dans le brevet européen N° 421 413. On peut également citer des matériaux biodégradables issus d'un mélange entre un polymère et un amidon modifié en surface, décrits par exemple dans les brevets US No. 1 485 833, et No. 1 487 050, No. 4 021 388, No. 4 125 495 et le brevet européen No. 45 621. Cette modification chimique de l'état de surface de l'amidon permet de créer des fonctions éthers ou esters ou de rendre la surface de l'amidon hydrophobe.
Il a également été proposé des matériaux formés d'un polymère et d'un amidon déstructuré c'est à dire ayant subi un prétraitement spécifique par un agent déstructurant comme l'urée, les hydroxydes de métaux alcalins ou alcalino-terreux, comme décrit dans les brevets européens No. 437 589, No. 437 561 et No. 758 669, ou l'eau comme décrit dans le brevet US No. 5 095 054. L'invention décrite dans le brevet européen No. 535 994 n'utilise pas le terme d'amidon déstructuré mais celui de gélatinisé dans la mesure où l'amidon est chauffé à 40°C en présence d'eau, de 1 à 45% en poids, pendant un temps assez long pour faire éclater les granules d'amidon.
Des méthodes d'obtention de matériaux biodégradables constitués d'amidon, de polymères autre que le polypropylène et d'additifs ont aussi été décrites. Ces additifs peuvent être des composés chimiques insaturés comme le caoutchouc naturel ou des élastomères comme décrit dans le brevet européen No. 363 383, ou des matières végétales comme la farine de bois ou de la cellulose comme décrit dans le brevet européen No. 652 910, ou encore un plastifiant comme des polyols, du glycérol, du chlorure de calcium ou des éthers comme décrit dans les brevets européens No. 473 726, No. 575 349 et US No. 5 393 804. Parmi les polymères envisagés, on peut citer le poly(éthylène/vinylalcool) et le poly(éthylène/acide acrylique proposés dans les brevets européens No. 400 532, No. 413 798 et No. 436 689, ou des copolymères aliphatiques et des polyesters comme proposé dans le brevet européen No. 539 541, ou encore du polyéthylène basse densité comme proposé dans la demande de brevet PCT No. WO 9115542 et le brevet US 5 162 392. Enfin, le brevet européen No. 560 244 propose d'utiliser de l'amidon possédant au moins 80% en poids d'amylopectine, alors que, dans notre cas, l'amylopectine représente au maximum 73% de l'amidon présent dans les farines utilisées.
Il a enfin été envisagé de préparer des matériaux biodégradables à partir d'amidon mélangé à des polymères modifiés chimiquement afin de pouvoir réagir avec les groupements hydroxyles de l'amidon et créer ainsi des liaisons entre le polymère et l'amidon. Ces techniques sont décrites par exemple dans les brevets européens No. 554 939 et No. 640 110.

Le but de l'invention est précisément de proposer un nouveau matériau biodégradable facile à fabriquer et capable de se substituer aux matières plastiques polluantes. Ce but est atteint grâce à un matériau biodégradable comprenant un polymère caractérisé en ce qu'il est constitué du mélange d'au moins un polymère avec au moins une farine céréalière et éventuellement d'un ou plusieurs additifs acceptables.

Dans le matériau biodégradable de l'invention :
- le polymère amène ses propriétés mécaniques, sa facilité de mise en forme par les techniques d'extrusion et d'injection, sa faible densité, ses propriétés rhéologiques et son inertie face à l'humidité,
- la farine céréalière amène sa biodégradabilité, ses propriétés rhéologiques, sa coloration naturelle, son odeur et son faible coût.
Le matériau biodégradable de l'invention se distingue des matières plastiques et analogues proposées dans l'art antérieur par le fait qu'il est obtenu à partir de farine céréalière et non d'amidon, ce qui permet d'utiliser les propriétés de tous les éléments constitutifs d'une farine céréalière. De plus, ces farines céréalières ne subissent aucun traitement, comme par exemple une gélatinisation ou déstructuration ou modification de la surface des amidons, comme proposé dans les procédés de l'art antérieur.
En outre, les polymères mis en oeuvre dans le matériau biodégradable de l'invention sont avantageusement non modifiés chimiquement et en conséquence ne possèdent pas de groupement fonctionnel susceptible de réagir avec les groupes hydroxyles de l'amidon ou des protéines présents dans une farine céréalière ce qui pourrait faciliter sa dégradabilité. Cette dégradabilité partielle (biofragmentation) ou totale peut en outre être stimulée par la présence d'agents spécifiques liés à la dégradation de la farine céréalière.
Enfin, le matériau biodégradable de l'invention ne comprend pas de plastifiants comme le glycérol ou l'urée.

On peut rappeler que les expressions "farine céréalière", qui sont utilisées dans l'invention, décrivent des matières végétales issues de céréales dont les compositions, en fonction des différents ingrédients de base, sont les suivantes (pourcentages pondéraux) :
- teneur en eau comprise entre 0 et 20%
- teneur en composés carbohydratés comprise entre 0 et 85% dont teneur en amidon comprise entre 0 et 80%
- teneur en protéines comprise entre 0 et 30%
- teneur en acides gras comprise entre 0 et 10%
- teneur en minéraux comprise entre 0 et 5%
- teneur en fibres comprise entre 0 et 20%

Par composés carbohydratés, protéines, acides gras, minéraux et fibres, on entend les multiples produits et molécules décrits de manière classique par de nombreux auteurs de référence dans le domaine des compositions de matières céréalières. Citons par exemple : "La composition des aliments. Tableaux des valeurs nutritives" - Souci/Fachmann/Kraut - 5^{ième} Edition - CRC Press.

Le tableau 1 présente, à titre d'exemple, des farines céréalières utilisables selon l'invention : des farines de blé (type T55), de maïs et de blé complet.

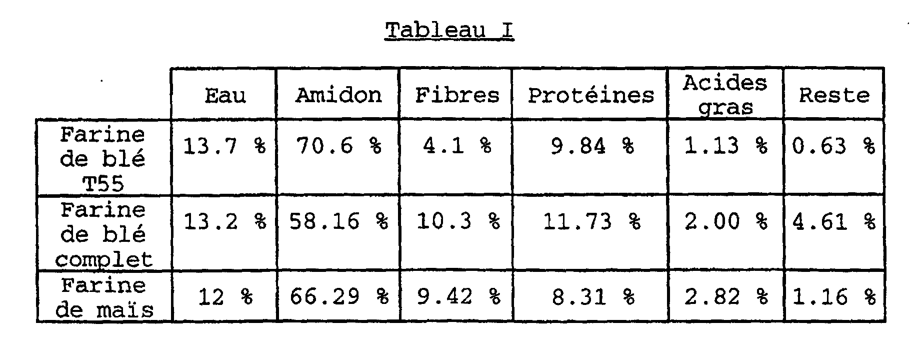

Il est possible de modifier la constitution d'une farine céréalière par diverses techniques. On peut citer par exemple le séchage qui permet de réduire l'humidité ou la turboséparation qui permet de séparer une farine céréalière en deux fractions granulométriquement différentes : une plus riche en amidon (grosses particules) et une plus riche en protéines (petites particules).

En ce qui concerne l'amidon, qui est un élément important dans une farine, celui-ci est constitué, d'un mélange de deux polymères du glucose : l'amylose et l'amylopectine. Le ratio entre ces deux molécules est différent selon les céréales et les variétés comme le montre le tableau 2 ci-dessous pour le blé et le maïs natifs et deux types de variété de maïs.

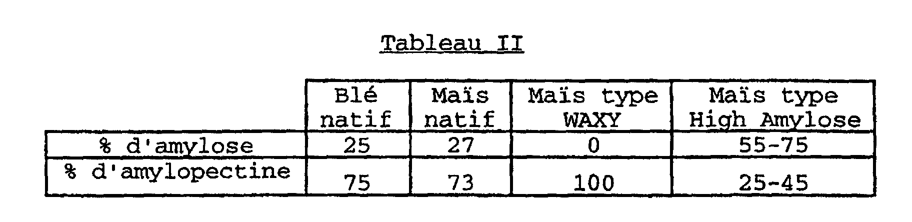

Il convient de noter que le ratio amylose/amylopectine peut être modifié par des transformations génétiques à partir des souches naturelles.
Ainsi, le matériau biodégradable selon l'invention est constitué avantageusement à partir d'une farine céréalière où l'amylopectine représente au maximum 73% de l'amidon présent dans cette farine céréalière.
Le matériau biodégradable de l'invention est remarquable en ce qu'il comprend la totalité des constituants d'une farine céréalière et non uniquement de l'amidon. Ceci permet en particulier d'éviter toutes les techniques d'extraction de l'amidon mais aussi d'utiliser les propriétés de certains constituants de la farine céréalière, comme la lubrification par les acides gras, l'amélioration de la tenue mécanique et de la flexibilité grâce aux fibres en cellulose, la coloration et l'arôme naturels dus à la destruction partielle des protéines au moment de l'élaboration des matériaux.
En outre, lors de la préparation du matériau biodégradable de l'invention, il est possible de sélectionner une variété bien déterminée de farine céréalière afin que par exemple le ratio amylose/amylopectine soit le plus favorable à la plastification de l'amidon.
Enfin, le matériau biodégradable de l'invention offre l'avantage d'être facile et peu onéreux à préparer. En effet, celui-ci est préparé en effectuant simplement un mélange entre la farine céréalière et le polymère. Ainsi, quand la farine céréalière se dégrade sous l'effet de différents processus, il se produit une fragilisation des chaînes polymériques, qui peut être accélérée par l'emploi d'agents oxydants, permettant ainsi une dégradation du plastique. On obtient donc une élimination complète de la partie végétale et une dégradation partielle (fragmentation) ou totale de la partie polymérique.
Ainsi, les matériaux biodégradables de l'invention peuvent être incinérés ou recyclés si ils sont récupérés rapidement.
Le tableau 3 ci-dessous rapporte les avantages et inconvénients des plastiques de l'art antérieur et des matériaux biodégradables de l'invention.

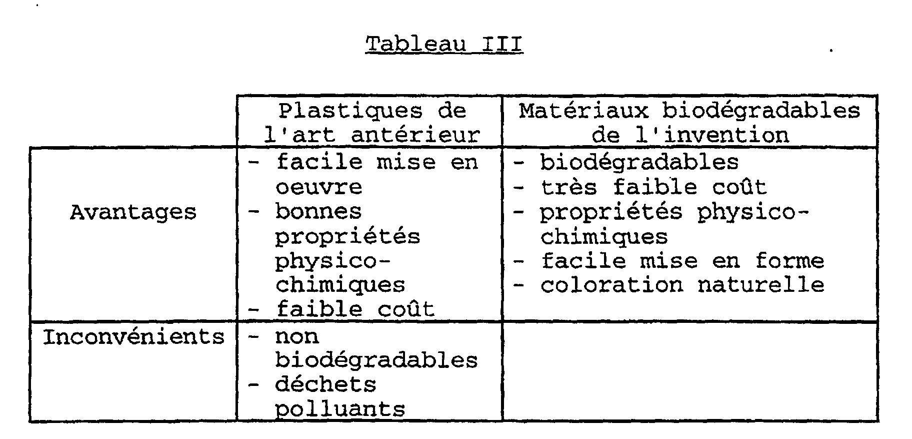

Les polymères entrant dans la composition des matériaux biodégradables de l'invention sont par exemple avantageusement choisis dans les groupes suivants :
- synthétiques : notamment le polyéthylène, le polypropylène, le polystyrène, le PVC, avec des indices de fluidité (MFI) comprises entre 0.1 et 300 (en g/10 min sous une charge de 2,16 kg et à 230°C),
- biodégradables : BIOPOL®, BAK®, ECO-PLA®, BIOMAX®, MATER-BI®, ECOFLEX®.

Les farines céréalières entrant dans la composition des matériaux biodégradables de l'invention sont obtenues à partir de grains de blé ou de maïs, mais aussi à partir d'un mélange de farine de blé et de farine de maïs et comprennent donc de 0 à 100% en poids de farine de blé. Ces farines céréalières présentent de préférence :
- un taux d'amylose élevé afin de favoriser la fluidité de la farine céréalière plastifiée,
- un faible taux de protéines afin de limiter l'arôme et la couleur naturelle.

Les additifs éventuellement présents dans les matériaux biodégradables de l'invention sont choisis en particulier parmi les groupes suivants :
- des pigments sous forme de mélanges maîtres ou sous forme liquide,
- des arômes synthétiques ou naturels,
- des agents antistatiques,
- des agents oxydants,
- des fibres naturelles (chanvre, lin, rafles de maïs, sons par exemple),
- des agents compatibilisants (qui servent à greffer les polymères entre eux),
acceptables pour l'utilisation pharmaceutique ou agroalimentaire des matériaux de l'invention.

On peut citer à titre d'exemple la composition d'un matériau biodégradable selon l'invention suivante :
- une teneur en poids de polymère comprise entre 0,1 et 99,9 %, par exemple entre 1 et 99%, préférentiellement entre 1 et 50%
- une teneur en poids de farine céréalière comprise entre 0,1 et 99,9%, par exemple entre 1 et 99%, préférentiellement entre 50 et 99%
- une teneur en poids de la totalité des additifs comprise entre 0 et 20%

L'invention concerne aussi la préparation du matériau biodégradable décrit précédemment. Un tel procédé consiste à mélanger et chauffer à une température comprise entre 10 et 500°C et de préférence entre 20 et 300°C, une farine céréalière de granulométrie moyenne comprise entre 0,1 et 2000 µm et présentant un pourcentage pondéral en eau compris entre 0 et 30%, et au moins un polymère et éventuellement un additif. La granulométrie moyenne de la farine céréalière est de façon plus avantageuse comprise entre 10 et 2000 µm, et de façon particulièrement avantageuse comprise entre 10 et 50 µm.
Les farines céréalières utilisées pour la préparation du matériau biodégradable de l'invention selon le procédé ci-dessous peuvent être préparées de la façon suivante :
- après sélection des variétés céréalières de préférence de blé ou de maïs pour les critères retenus (taux d'amylose élevé et faible taux de protéines) liés à leurs caractéristiques variétales, celles-ci sont broyées par des techniques classiques afin d'obtenir la farine céréalière.
- ces farines céréalières subissent ensuite un séchage contrôlé afin d'éliminer l'humidité et ceci afin d'éviter un dégazage trop important au cours des étapes de mise en forme ultérieure. Le pourcentage pondéral en eau des farines céréalières utilisées dans le procédé de l'invention est compris entre 0 et 30%. On rappelle que ce séchage peut s'effectuer soit avant le mélange avec le polymère et/ou le ou les additifs soit pendant le mélange à l'aide de modules de dégazage.
- les farines céréalières peuvent subir enfin une phase de tamisage et/ou de turboséparation. Les farines céréalières ainsi préparées ont des granulométries moyennes, dénommées D50, comprises entre 0,1 et 2000 µm, par exemple entre 10 et 1000 µm.

Avantageusement, le mélange et le chauffage du procédé selon l'invention consiste en une cuisson-extrusion bi-vis ou mono-vis.

Cette opération peut être réalisée dans un cuisseur-extrudeur du type BC 45 commercialisé par la Société CLEXTRAL.
Les paramètres liés à la cuisson-extrusion sont donnés dans le tableau IV ci-dessous.

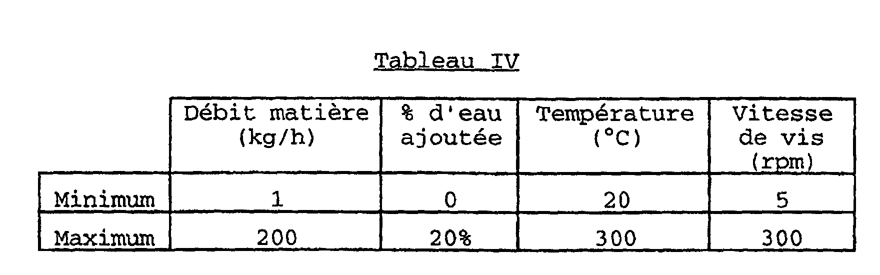

Avantageusement, après chauffage le matériau biodégradable est refroidi puis broyé par toute technique appropriée afin d'obtenir des granulés.

Le matériau biodégradable ainsi obtenu peut être utilisé pour la fabrication d'objets divers comme des emballages de récipients constitués en totalité ou en partie dudit matériau. L'invention concerne aussi ces objets et leur préparation par mise en forme du matériau biodégradable.
La mise en forme du matériau biodégradable peut être réalisée par toute méthode connue de l'homme du métier comme celles utilisées en plasturgie, parmi lesquelles on peut citer : l'injection mono ou multi-matière (par exemple la bi-injection), l'extrusion-soufflage, le thermoformage. Les températures de mise en oeuvre de ces différentes techniques sont comprises entre 10 et 500°C et de préférence entre 20 et 300°C. Les moules utilisés peuvent être froids ou chauds. Leur température maximum étant de l'ordre de 150°C.

Selon une forme de réalisation particulière du procédé de mise en forme du matériau biodégradable de l'invention, on ajoute lors de ladite mise en forme un ou plusieurs polymères selon un procédé de bi-injection.
L'apport de polymère peut représenter entre 0 et 99% en poids de la matière totale mise en forme.

D'autres avantages et caractéristiques de l'invention apparaîtront des exemples qui suivent concernant la préparation et l'utilisation d'un matériau biodégradable selon l'invention et qui se réfère aux figures en annexe dans lesquelles :

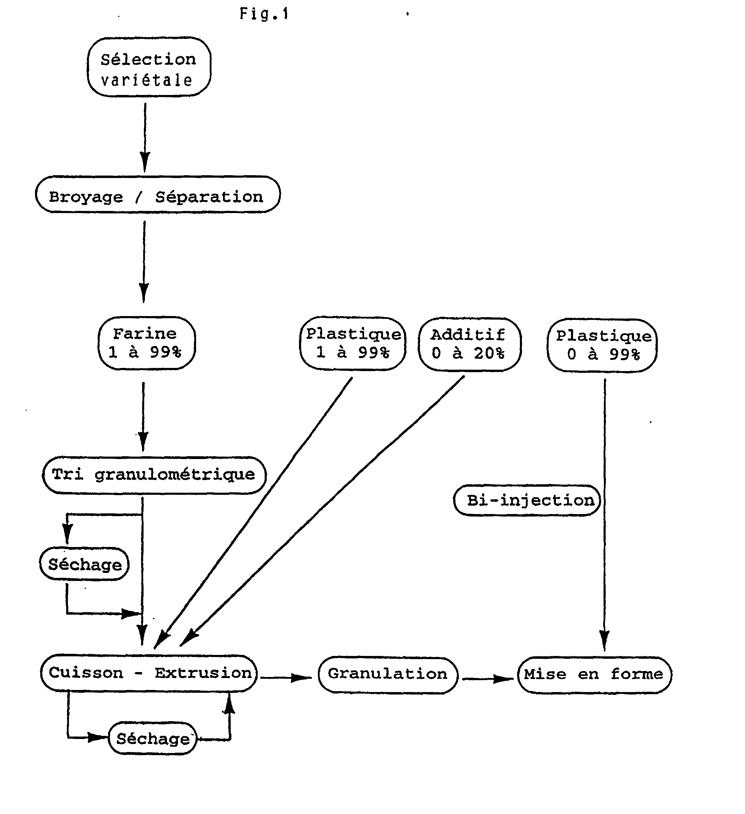

- la figure 1 est une récapitulation schématique d'un procédé de bi-injection selon l'invention,
- la figure 2 représente un pilulier biodégradable obtenu selon un procédé et à partir d'un matériau biodégradable conformes à l'invention.
- la figure 3 présente des plateaux repas réalisés à partir d'un matériau biodégradable selon les procédés décrits par l'invention.

### Exemple 1 : obtention d'un pilulier biodégradable.

La farine céréalière utilisée dans cet exemple est une farine céréalière de maïs séchée jusqu'à environ 1,2% d'eau.
L'indice de fluidité (MFI pour "Melt Flour Index" ou grade) du polypropylène employé est égal à 55 g/10 mn à 230 °C sous 2,16 kg.
Le matériau biodégradable contient 60% en poids de farine céréalière.

Le tableau V ci-dessous présente les différents paramètres utilisés pendant la cuisson-extrusion de ce mélange.

**Tableau V**

| | |
|---|---|
| Température (°C) | 190 |
| Débit matière (kg/h) | 20 |
| Eau ajoutée (l/h)) | 0 |
| Vitesse des vis (tour/min) | 80 |

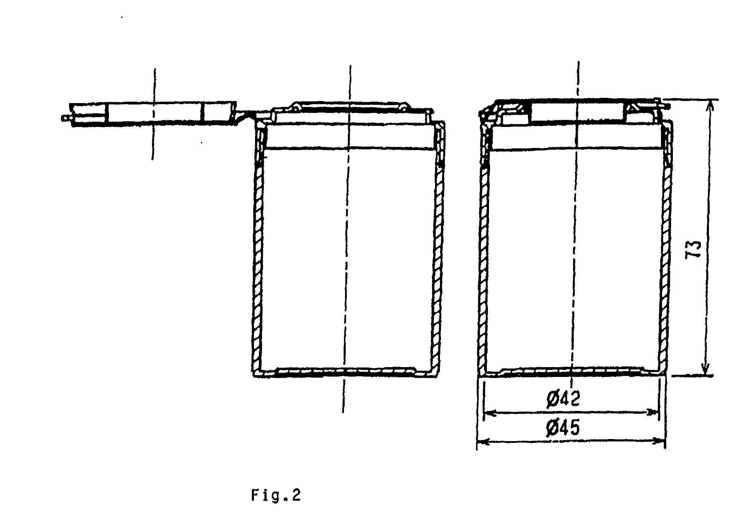

Le matériau obtenu est refroidi, granulé puis bi-injecté entre 180 et 220°C dans un moule froid afin d'obtenir le pilulier représenté à la figure 2. Les principales propriétés physico-chimiques de ce matériau d'emballage sont regroupées dans le tableau VI ci-dessous.

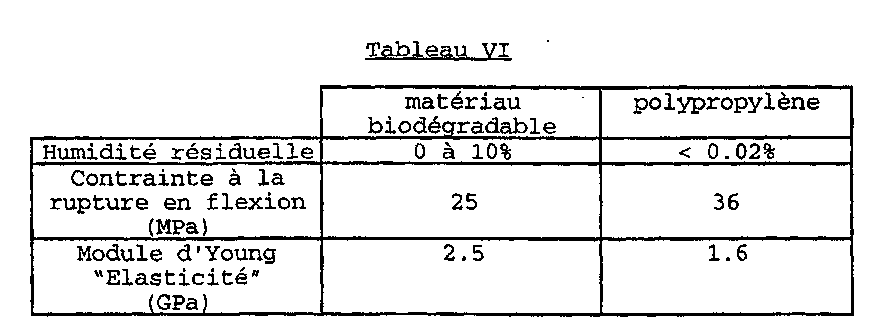

Les résultats du tableau VI montrent que le matériau biodégradable obtenu selon l'invention conserve une bonne contrainte de rutpure en flexion et permet en outre d'obtenir une meilleure rigidité.

### Exemple 2 : obtention de plateaux repas biodégradables.

La matière première biodégradable utilisée est identique à celle de l'exemple 1 c'est à dire qu'elle contient 60% en poids de farine de maïs et 40% en poids de polypropylène (grade 55).

Dans ce second exemple, la technique de mise en forme choisie est l'injection directe du matériau biodégradable. La température d'injection de la matière biodégradable se situe entre 170 et 220°C. De son côté, le moule est chauffé entre 20 et 130°C.

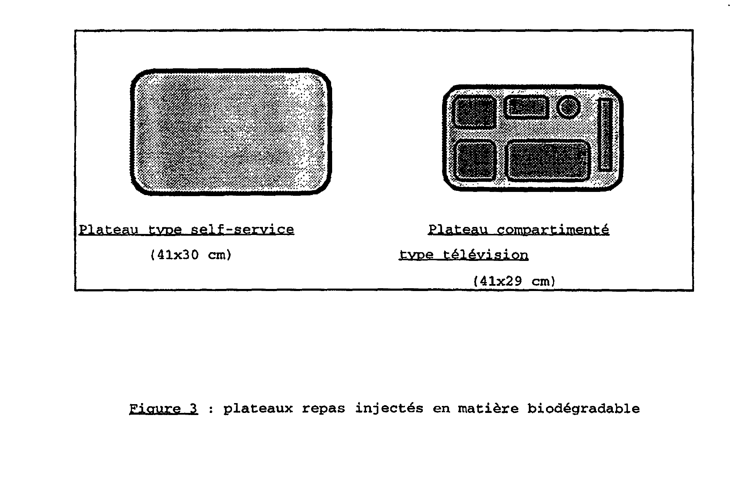

La figure 3 présente les plateaux repas réalisés à partir des procédés décrits par l'invention.
Pour cette application, les intérêts liés à l'utilisation d'un matériau à matrice végétale en remplacement d'un polymère de synthèse vierge ou chargé sont les suivants :
- faible coût de la matière première
- matière première plus rigide qu'un plastique
- matière première respectant l'environnement après utilisation.

## Revendications

1. Matériau biodégradable du type comprenant au moins un polymère, au moins une farine céréalière et éventuellement un ou plusieurs additifs acceptables, **caractérisé en ce que** l'amidon présent dans ladite farine est constitué au maximum de 73% d'amylopectine de façon à ce que ladite farine présente un taux d'amylose élevé favorisant la fluidité dudit matériau biodégradable.

2. Matériau biodégradable selon la revendication 1, **caractérisé en ce que** ladite farine céréalière est une farine de blé ou de maïs ou un mélange de celles-ci.

3. Matériau biodégradable selon l'une des revendications 1 à 2, **caractérisé en ce que** la farine céréalière comprend de 0 à 100% en poids de farine de blé.

4. Matériau biodégradable selon l'une quelconque des revendications 1 à 3, **caractérisé en ce que** le polymère est non modifié chimiquement et est choisi notamment parmi les polypropylènes, les polyéthylènes, les polystyrènes et/ou les PVC.

5. Matériau biodégradable selon l'une quelconque des revendications 1 à 4, **caractérisé en ce que** le polymère de synthèse a un indice de fluidité compris entre 0,1 et 300 g/10mn à 230°C sous 2,16 kg.

6. Matériau biodégradable selon l'une quelconque des revendications 1 à 3, **caractérisé en ce que** le polymère est un polymère biodégradable choisi dans le groupe comprenant notamment BIOPOL®, BAK®, ECO-PLA®, BIOMAX®, MATER-BI®, ECOFLEX®.

7. Matériau biodégradable selon l'une quelconque des revendications 1 à 6, **caractérisé en ce qu'**il comprend un ou plusieurs additifs choisi notamment parmi : des pigments, des arômes synthétiques ou naturels, des agents antistatiques, des agents oxydants, des agents compatibilisants et des fibres naturelles telles que le chanvre, le lin, les rafles de maïs, les sons.

8. Procédé de préparation d'un matériau biodégradable selon l'une quelconque des revendications 1 à 7, **caractérisé en ce qu'**il consiste à mélanger et chauffer à une température comprise entre 10 et 500°C et de préférence entre 20 et 300°C, une farine céréalière de granulométrie moyenne comprise entre 0,1 et 2000 µm, présentant un pourcentage pondéral en eau compris entre 0 et 30% et présentant un amidon constitué au maximum de 73% d'amylopectine de façon à ce que ladite farine présente un taux d'amylose élevé favorisant la fluidité dudit matériau biodégradable, et au moins un polymère et éventuellement un additif.

9. Procédé de mise en forme d'un matériau biodégradable selon les revendications 1 à 7, **caractérisé en ce qu'**il consiste en une technique utilisée en plasturgie.

10. Procédé selon la revendication 9, **caractérisé en ce qu'**il consiste en une injection mono ou multi-matières.

11. Un objet, tel qu'un emballage ou un récipient, mis en forme par un procédé selon l'une quelconque des revendications 9 ou 10.

12. Un objet, tel qu'un emballage ou un récipient, constitué en totalité ou en partie d'un matériau biodégradable selon l'une quelconque des revendications 1 à 7.

## Patentansprüche

1. Biologisch abbaubarer Stoff der Art, die mindestens ein Polymer, mindestens ein Getreidemehl und eventuell einen oder mehrere annehmbare Zusatzstoffe aufweist, **dadurch gekennzeichnet, dass** die im besagten Mehl vorhandene Stärke zu höchstens 73% aus Amylopektin besteht, so dass das besagte Mehl einen hohen, die Flie_fähigkeit des biologisch abbaubaren Stoffes begünstigenden Amylosegehalt aufweist.

2. Biologisch abbaubarer Stoff nach Anspruch 1, **dadurch gekennzeichnet, dass** das besagte Getreidemehl ein Weizenoder Maismehl oder eine Mischung dieser beiden ist.

3. Biologisch abbaubarer Stoff nach einem der Ansprüche 1 oder 2, **dadurch gekennzeichnet, dass** das Getreidemehl gewichtsmä_ig zu 0 bis 100% aus Weizenmehl besteht.

4. Biologisch abbaubarer Stoff nach einem der Ansprüche 1 bis 3, **dadurch gekennzeichnet, dass** das Polymer chemisch unmodifiziert ist und insbesondere aus der Gruppe der Polypropylene, Polyethylene, Polystyrene und/oder der PVCs gewählt ist.

5. Biologisch abbaubarer Stoff nach einem der Ansprüche 1 bis 4, **dadurch gekennzeichnet, dass** das Synthesepolymer einen Flie_fähigkeitswert zwischen 0,1 und 300 g/10 Min. bei 230° unter 2,16 kg hat.

6. Biologisch abbaubarer Stoff nach einem der Ansprüche 1 bis 3, **dadurch gekennzeichnet, dass** das Polymer biologisch abbaubares Polymer aus der Gruppe, die aus BIOPOL®, BAK®, ECOPLA®, BIOMAX®, MATER-BI®, ECOFLEX® besteht, gewählt ist.

7. Biologisch abbaubarer Stoff nach einem der Ansprüche 1 bis 6, **dadurch gekennzeichnet, dass** er einen oder mehrere Zusatzstoffe enthält, die insbesondere aus Folgenden gewählt sind: Farbstoffe, Kunst- oder Naturaroma, Antistatikmittel, Oxydierungsmittel, Verträglichkeitsmittel und Naturfasern wie Hanf, Flachs Maisstiele, Kleien.

8. Zubereitungsverfahren für einen biologisch abbaubaren Stoff nach einem der Ansprüche 1 bis 7, **dadurch gekennzeichnet, dass** es darin besteht, ein Getreidemehl mit einer durchschnittlichen Körnung von zwischen 0,1 und 2000 µm bei einer Temperatur zwischen 10 und 500°C, vorzugsweise zwischen 20 und 300°C zu vermischen und zu erhitzen, wobei das besagte Getreidemehl einen Gewichtsanteil an Wasser zwischen 0 und 30% aufweist und eine Stärke, welche zu höchstens 73% aus Amylopektin besteht, so dass das besagte Mehl einen hohen, die Flie_fähigkeit des besagten biologisch abbaubaren Stoffes begünstigenden Amylosegehalt aufweist, und mindestens ein Polymer und eventuell einen Zusatzstoff.

9. Verfahren zur Ausbildung eines biologisch abbaubaren Stoffes nach einem der Ansprüche 1 bis 7, **dadurch gekennzeichnet, dass** es in einer in der Kunststoffindustrie angewandten Technik besteht.

10. Verfahren nach dem Anspruch 9, **dadurch gekennzeichnet, dass** es in einer Ein- oder Mehrstoffeinspritzung besteht.

11. Ein Gegenstand wie eine Verpackung oder ein Behälter, der durch ein Verfahren nach einem der Ansprüche 9 oder 10 ausgebildet ist.

12. Ein Gegenstand wie eine Verpackung oder ein Behälter, der vollkommen oder teilweise aus einem biologisch abbaubaren Stoff nach einem der Ansprüche 1 bis 7 besteht.

## Claims

1. A biodegradable material of the type comprising at least one polymer, at least one cereal flour and possibly one or a plurality of acceptable additives, **characterized in that** the starch present in said flour is comprised of a maximum of 73 % amylopectin such that said flour has an amylose content favoring the fluidity of said biodegradable material.

2. A biodegradable material according to Claim 1, wherein said cereal flour is a wheat flour or corn flour or a mixture thereof.

3. A biodegradable material according to one of Claims 1 to 2, wherein the cereal flour comprises 0 % to 100 % by weight of wheat flour.

4. A biodegradable material according to any one of Claims 1 to 3, wherein the polymer is chemically unmodified and chosen particularly from among the polypropylenes, the polyethylenes, the polystyrenes and / or the PVCs.

5. A biodegradable material according to any one of Claims 1 to 4, wherein the synthetic polymer has an index of fluidity of between 0.1 and 300 g / 10 mn at 230 °C under 2.16 kg.

6. A biodegradable material according to any one of Claims 1 to 3, wherein the polymer is a degradable polymer chosen from the group comprising particularly BIOPOL®, BAK®, ECOPLA®, BIOMAX®, MATER-BI®, ECOFLEX®.

7. A biodegradable material according to any one of Claims 1 to 6, wherein it comprises one or a plurality of additives chosen in particular from : the pigments, the synthetic or naturally occurring aromas, the antistatic agents, the antioxidant agents, compatibilizing agent and natural fibers such as hemp, flax, corn cob, bran.

8. A method for preparing a biodegradable material according to any one of the Claims 1 to 7, **characterized in that** it comprises mixing and heating to a temperature between 10 and 500 °C and preferably between 20 and 300 °C a cereal flour having an average granulometry of between 0.1 and 2,000 µm, having a percent by weight of water of between 0 and 30 % and comprising a starch comprised of a maximum of 73 % amylopectin such that said flour has an elevated amylose content favoring the fluidity of said biodegradable material and at least one polymer and possibly an additive.

9. A method for shaping a biodegradable material according to Claims 1 to 7, wherein it comprises a technique used in plastification.

10. A method according to Claim 9, wherein it consists of injection of one or a plurality of materials.

11. An object such as packaging or a container formed by a method according to any one of Claims 9 or 10.

12. An object such as packaging or a container, comprised entirely or in part of a biodegradable material according to any one of Claims 1 to 7.
